# EUROPEAN PATENT APPLICATION

(11) **EP 4 723 038 A1**
(43) Date of publication of application: **08.04.2026**
(21) Application number: 25206258.3
(22) Date of filing: 02.10.2025
(51) Int. Cl.: G06T 7/564

(54) **SHAPE GENERATION APPARATUS, CONTROL METHOD, AND PROGRAM**

(30) Priority: 04.10.2024 JP 2024175262
(71) Applicant: Canon Kabushiki Kaisha, Tokyo, 146-8501 (JP)
(72) Inventor: TAKAMA, Yasufumi, Ohta-ku, Tokyo, 146-8501 (JP)
(74) Representative: TBK

(57) **Abstract**

A shape generation apparatus (102) obtains, for each of image capturing apparatuses (101) which capture an object from directions different from each other, a foreground image and a parameter including a depth of field of the image capturing apparatuses, sets voxels in a space captured by the image capturing apparatuses, corrects a detecting area based on a size of the voxel and the parameter so that the detecting area is narrowed than the depth of field of the image capturing apparatuses, determines whether a first voxel included in the plurality of voxels is included within a range of the corrected detecting area, and determines whether to delete the first voxel using the foreground image corresponding to the image capturing apparatus for which the first voxel is determined to be included within the range of the corrected detecting area.

## Description

### TECHNICAL FIELD

The present disclosure relates to a technique of generating the shape model of an object based on images captured from multiple viewpoints.

### BACKGROUND

There is known a technique of generating the three-dimensional shape model of an object from a multi-viewpoint image obtained by capturing the object from different directions using a plurality of image capturing apparatuses, and generating an image (virtual viewpoint image) of a virtual space where the shape model is arranged when observed from an arbitrary virtual viewpoint. The three-dimensional shape model of the object is generated using, for example, a method called shape-from-silhouette. In shape-from-silhouette, a shape model is represented by a set of cubes (voxels). The voxel present inside an object is projected in a region (object region) where the object appears in a plurality of captured images. When generating a shape model using shape-from-silhouette, a silhouette image where such an object region and a non-object region are distinguished. Here, if the silhouette image is unclear, the unclearness is reflected on the shape model obtained by shape-from-silhouette, and this can influence the quality of a virtual viewpoint image. For example, if a region where the object is originally present does not become an object region in a silhouette image so that a defect occurs in the silhouette of the object, a defect can also occur in the shape model. For example, when an object is present outside the range of the depth of field of an image capturing apparatus, the outline of the image region of the object becomes blurred and a defect may occur in the silhouette. Note that the depth of field indicates the range within which an image capturing apparatus can be considered in focus.

Japanese Patent Laid-Open No. 2022-042153 describes a method of capturing an object using a plurality of image capturing apparatuses such that the image capturing range fits within the depth of field around the focal point of each camera. However, in a case where the image capturing range is large, it is assumed to be difficult to perform capturing such that an object fits within the range of the depth of field over the entire image capturing range. Japanese Patent Laid-Open No. 2022-110751 describes a method of determining whether an object is located within the range of the depth of field of each image capturing apparatus, and generating the shape model of the object by shape-from-silhouette using only captured images obtained by the image capturing apparatuses for each of which the object is located within the range of the depth of field. According to the method described in Japanese Patent Laid-Open No. 2022-110751, by generating a shape model using shape-from-silhouette while considering the depth of field, the shape model without any defect can be generated even if a defect occurs in the silhouette of the object outside the range of the depth of field.

### SUMMARY

When generating a shape model in a large range by using shape-from-silhouette, processing is first started using large voxels, and the voxel is made smaller only for the region where the object is located. In this manner, by executing processing while changing the voxel size stepwise, the shape model of the object can be generated efficiently. On the other hand, the larger the voxel size, the greater the error in determination as to whether the object is included in the range of the depth of field as described in Japanese Patent Laid-Open No. 2022-110751, and the higher the probability of making an error in determination as to whether the object is present within the range of the depth of field. If the object outside the range of the depth of field is determined to be present within the range of the depth of field, the image capturing apparatus that does not capture the object within the range of the depth of field so that a defect is likely to occur in the silhouette is used for shape-from-silhouette, and this can cause a defect in the shape model.

The present disclosure provides a technique of generating the highly accurate shape model of an object without any defect.

The present disclosure in its first aspect provides a shape generation apparatus as specified in claim 1. Optional features are specified in claims 2 to 6.

The present disclosure in its second aspect provides a shape generation apparatus as specified in claim 7. Optional features are specified in claims 8 to 12.

The present disclosure in its third aspect provides a control method as specified in claim 13.

The present disclosure in its fourth aspect provides a control method as specified in claim 14.

The present disclosure in its fifth aspect provides a program as specified in claim 15.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a block diagram showing an example of a system configuration;
Fig. 2 is a view for explaining the depth of field of an image capturing apparatus;
Fig. 3 is a block diagram showing an example of the hardware arrangement of a shape generation apparatus;
Fig. 4A is a view for explaining the coordinate system of camera parameters;
Fig. 4B is a view for explaining the coordinate system of camera parameters;
Fig. 5A is a flowchart illustrating an example of the procedure of processing executed by the shape generation apparatus;
Fig. 5B is a flowchart illustrating an example of the procedure of processing executed by the shape generation apparatus;
Fig. 6 is a view for explaining a shape generation region;
Fig. 7 is a view for explaining octree division levels;
Fig. 8 is a view showing an example of a voxel defined at division level 0;
Fig. 9 is a view for explaining octree voxel division;
Fig. 10A is a view for explaining octree voxel division;
Fig. 10B is a view for explaining octree voxel division;
Fig. 11 is a view showing vertices newly generated by voxel division;
Fig. 12A is a view for explaining shape model generation processing considering the depth of field;
Fig. 12B is a view for explaining the shape model generation processing considering the depth of field;
Fig. 12C is a view for explaining the shape model generation processing considering the depth of field;
Fig. 12D is a view for explaining the shape model generation processing considering the depth of field;
Fig. 13 is a view for explaining the shape model generation processing considering the depth of field; and
Fig. 14 is a view for explaining the shape model generation processing considering the depth of field.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### (System Configuration and Apparatus Arrangement)

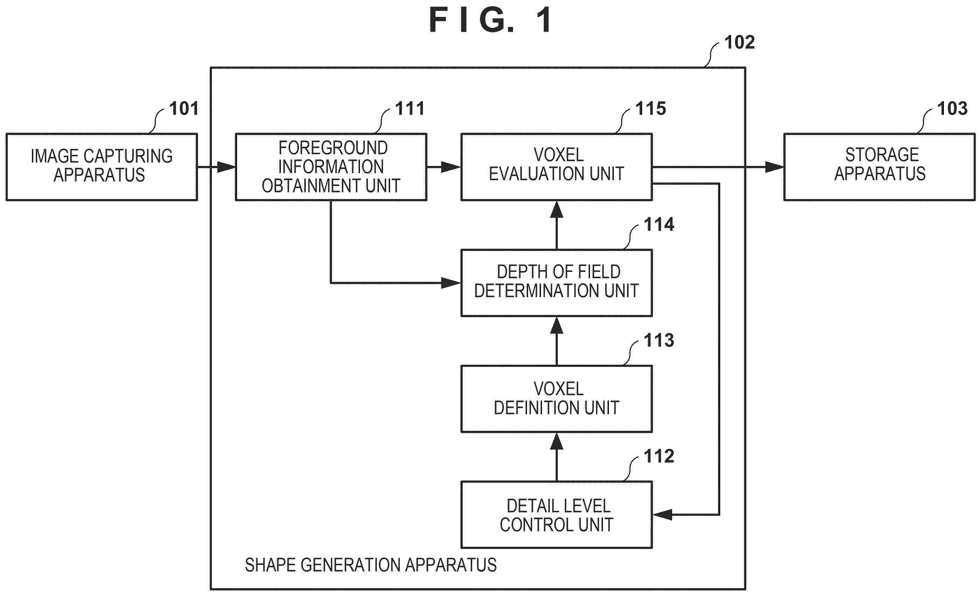

Fig. 1 shows an example of the configuration of an image processing system according to this embodiment. The image processing system includes, for example, an image capturing apparatus 101, a shape generation apparatus 102, and a storage apparatus 103. Note that this is merely an example, and the image processing system may include another component. For example, the image processing system may include an image generation apparatus that generates a virtual viewpoint image from a three-dimensional model (to be also referred to as a shape model, a 3D model, or the like) of an object generated by the shape generation apparatus 102. Additionally, multiple apparatuses may be configured as one apparatus by, for example, including the storage apparatus 103 in the shape generation apparatus 102. In an example, the shape generation apparatus 102 may be included in one image capturing apparatus 101, and captured images from the other image capturing apparatuses 101 may be aggregated in the shape generation apparatus 102. Note that an "image" in this embodiment may be a still image or a moving image (video).

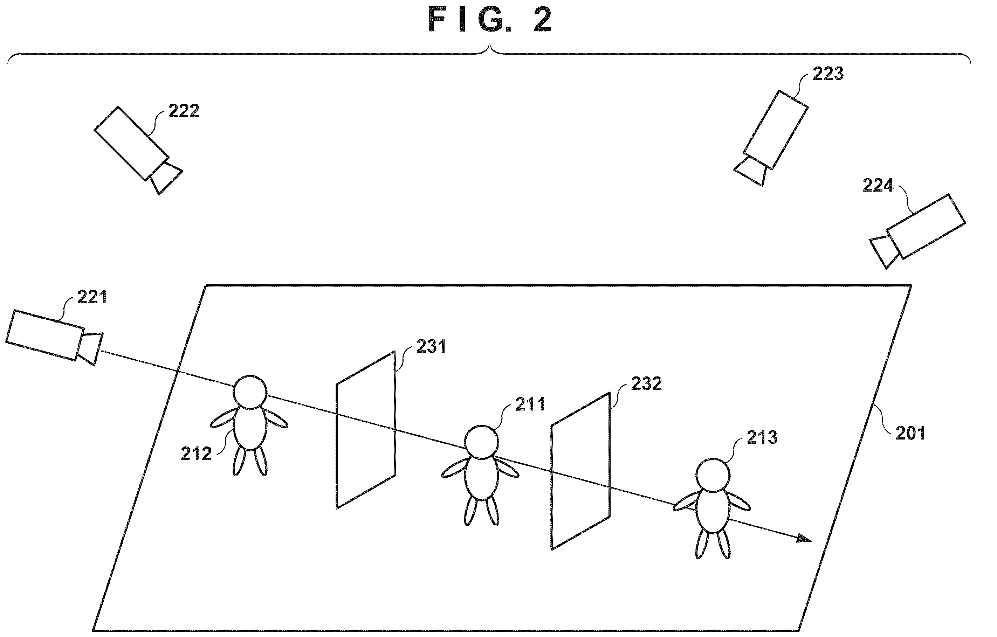

The image capturing apparatus 101 includes a plurality of image capturing apparatuses (cameras). For example, as shown as cameras 221 to 224 in Fig. 2, the plurality of cameras are installed so as to capture objects (objects 211 to 213) on a field 201 from a plurality of different directions. Note that identification information (for example, an identification number) for identifying the camera is assigned to each of the cameras 221 to 224, and the camera having captured a captured image is specified by the identification information. Note that the cameras 221 to 224 may not be installed all around the object, and may be installed only within a predetermined angle range when viewed from the object in accordance with the limitation on the installation places or the like. The number of cameras is not limited. For example, when capturing a soccer or rugby match, about several tens to several hundreds of cameras may be installed so as to surround the field. A plurality of cameras having different angles of view, such as a telephotographic camera and a wide-angle camera, may be installed. All cameras in the system are connected to each other, or connected to, for example, a time server or an apparatus that provides a reference time for the system, and synchronized using common real-world time information. Image capturing time information is assigned to images captured by all the cameras in the system.

The shape generation apparatus 102 generates the shape model of the object, and outputs it to the storage apparatus 103. Details of the shape generation apparatus 102 will be described later. The storage apparatus 103 stores data of the shape model generated by the shape generation apparatus 102. In addition, for example, the storage apparatus 103 may hold image data captured by the image capturing apparatus 101, and provide it to the shape generation apparatus 102, as needed. The storage apparatus 103 may be configured to save information other than the shape model, which is necessary for generating a virtual viewpoint image by an image generation apparatus (not shown), and provide it to the image generation apparatus, as needed.

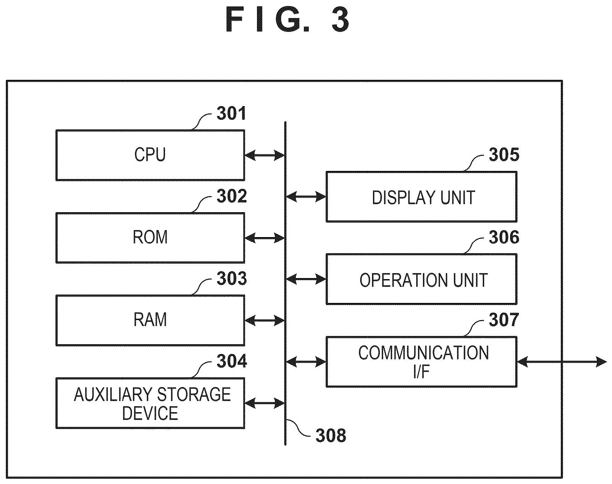

An example of the arrangement of the shape generation apparatus 102 will be described next. Fig. 3 is a block diagram showing an example of the hardware arrangement of the shape generation apparatus 102. The shape generation apparatus 102 includes, for example, as the hardware arrangement, a CPU 301, a ROM 302, a RAM 303, an auxiliary storage device 304, a display unit 305, an operation unit 306, a communication I/F 307, and a bus 308. Here, CPU is an abbreviation for Central Processing Unit, ROM is an abbreviation for Read Only Memory, RAM is an abbreviation for Random Access Memory, and I/F is an abbreviation for Interface.

The CPU 301 controls the overall shape generation apparatus 102 using computer programs and data stored in at least one of the ROM 302, the RAM 303, and the auxiliary storage device 304, and implements the respective functions (to be described later) of the shape generation apparatus 102. Note that the shape generation apparatus 102 may include one or more dedicated hardware components different from the CPU 301, and at least a part of processing of the CPU 301 may be executed by the dedicated hardware components. The dedicated hardware components can be, for example, an Application-Specific Integrated Circuit (ASIC), a Digital Signal Processor (DSP), a Field Programmable Gate Array (FPGA), and the like. The CPU is merely an example, and the shape generation apparatus 102 can include one or more arbitrary processors such as a Micro Processing Unit (MPU). A plurality of processors such as a multi-core CPU may be used. The ROM 302 stores programs and the like that need not be changed. The RAM 303 temporarily stores a program and data supplied from the auxiliary storage device 304 and data externally supplied via the communication I/F 307. Note that the ROM 302 and the RAM 303 are examples of memories, and the shape generation apparatus 102 can include one or more arbitrary types of memories. For example, the auxiliary storage device 304 includes a storage device such as a hard disk drive, and stores various data such as image data and audio data.

The display unit 305 includes, for example, a device that presents information, such as a liquid crystal display or a Light Emitting Diode (LED). The display unit 305 can display a Graphical User Interface (GUI) or the like used by the user to operate the shape generation apparatus 102. Note that the display unit 305 may be configured to present not only visual information but also information by, for example, audio output via a loudspeaker or the like, vibration output using a vibrator, or the like. The operation unit 306 includes, for example, a hardware component that accepts a user operation, such as a keyboard, a mouse, a joystick, or a touch panel. The operation unit 306 accepts a user operation via the component as described above, and supplies each kind of instruction corresponding to the accepted operation to the CPU 301. Note that the CPU 301 can function as a display control unit that controls the display unit 305 and an operation control unit that controls the operation unit 306. The communication I/F 307 includes a hardware component that is used for communication with an apparatus outside the shape generation apparatus 102. For example, if the shape generation apparatus 102 is connected to an external apparatus via a wire, a communication cable is connected to the communication I/F 307. If the shape generation apparatus 102 has a function of wirelessly communicating with an external apparatus, the communication I/F 307 includes an antenna, a radio frequency (RF) chip, a baseband chip, or the like. The bus 308 connects the respective functional units of the shape generation apparatus 102 to each other to transmit information. Note that the bus is merely an example, and the respective functional units may be connected to each other by another component. In this embodiment, a case is shown where the display unit 305 and the operation unit 306 are present in the shape generation apparatus 102, but the embodiment is not limited thereto. For example, the shape generation apparatus 102 may include an interface for connecting to at least one of the display unit 305 and the operation unit 306 prepared outside, and may not internally include the display unit 305 and the operation unit 306.

Referring back to Fig. 1, the functional arrangement of the shape generation apparatus 102 will be described. The shape generation apparatus 102 includes, as its functions, for example, a foreground information obtainment unit 111, a detail level control unit 112, a voxel definition unit 113, a depth of field determination unit 114, and a voxel evaluation unit 115. Note that these functional units can be implemented by, for example, the above-described CPU 301 executing programs stored in at least one of the ROM 302, the RAM 303, and the auxiliary storage device 304. The arrangement shown in Fig. 1 is merely an example, and an additional functional block may be prepared. One functional block may be combined with the other functional block to form a functional block, or one functional block may be divided into a plurality of functional blocks.

The foreground information obtainment unit 111 generates a foreground image from each of captured images obtained by image capturing using the image capturing apparatus 101 (cameras 221 to 224). The foreground image is an image generated by extracting an object region (foreground region) from a captured image. In a case of performing image capturing from the same direction at many successive times, the object extracted as the foreground region generally indicates a dynamic object (moving body) which temporally changes (whose position or shape changes) in captured images. For example, in a sporting event, the dynamic object can be, for example, a person such as a player or a referee in a field where the sporting event takes place, and can be a ball in addition to a person in a case of a ball game. In a concert or an entertainment, the dynamic object can be, for example, a singer, a player, a performer, or a host. Note that the foreground information obtainment unit 111 may be prepared for each of the plurality of cameras.

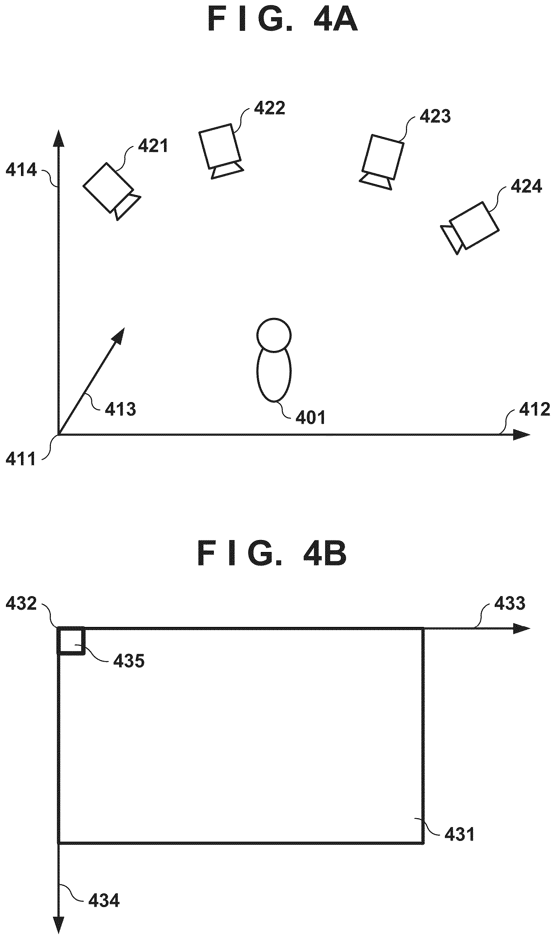

Note that the shape generation apparatus 102 obtains state information concerning image capturing, such as the position, posture (orientation or image capturing direction), focal length, optical center, distortion, F-number, and depth of field of each camera (from, for example, information provided by the image capturing apparatus 101 or an input by the installer of the system). Hereinafter, the state information may be referred to as a camera parameter. The camera parameters concerning the position and posture (orientation or image capturing direction) of the camera may be referred to as extrinsic parameters, and the parameters concerning the focal length, image center, or distortion may be referred to as intrinsic parameters. A coordinate system concerning the camera parameters of the cameras 221 to 224 will now be described with reference to Figs. 4A and 4B. Fig. 4A shows a state in which cameras 421 to 424 for capturing an object 401 are arranged in a three-dimensional space. Note that the cameras 421 to 424 correspond to the cameras 221 to 224 shown in Fig. 2. The position and posture of each of the cameras 421 to 424 are represented using one world coordinate system defined by an origin 411, an Xw-axis 412, a Yw-axis 413, and a Zw-axis 414 for a three-dimensional coordinate point. Fig. 4B shows a camera image coordinate system (to be referred to as an image coordinate system hereinafter) in a captured image 431 of each of the cameras 421 to 424. In the image coordinate system, an origin 432, an Xi-axis 433, and a Yi-axis 434 for a two-dimensional coordinate point are set. Here, a pixel at a coordinate point (0, 0) is indicated by a pixel 435. The image coordinate system of each of the remaining cameras is similarly defined.

The foreground information obtainment unit 111 receives a captured image from each camera, and generates a foreground image. Alternatively, the foreground information obtainment unit 111 may obtain a captured image which is captured in advance and saved in the auxiliary storage device 304 or the like, and generate a foreground image. In addition, the foreground information obtainment unit 111 specifies camera parameters for each camera. For example, the foreground information obtainment unit 111 extracts a feature point from an marker image (for example, a checkerboard) for camera calibration, which is captured by each camera in advance, and associates it. Then, the camera parameters are calculated by calibrating each camera so that the error between the feature point captured by each camera and its corresponding point is minimized. The calibration of the camera parameter can be executed by an arbitrary existing method. Note that the camera parameter may be obtained in synchronization with the captured image, or may be obtained not in synchronization with the captured image, as needed. Alternatively, the camera parameter may be obtained only once in, for example, a preparation stage such as activation of the shape generation apparatus 102.

The detail level control unit 112 controls the voxel size (to be also referred to as the voxel detail level) to be used in generation of a shape model. In this embodiment, the voxel is assumed to be a cube having eight vertex coordinate points. Here, when generating a shape model based on captured images of a sport match such as a soccer match, the region (to be referred to as the shape generation region) targeted for generation of the shape model is large like the entire soccer ground. On the other hand, as compared to the entire shape generation region, the region where the object is present is expected to be sufficiently small. In such a case, in order to generate a highly accurate three-dimensional shape model, the object needs to be represented by fine voxels. On the other hand, if the entire space is represented by fine voxels, the amount of data representing the entire region becomes significantly large, and the required memory amount and processing time are expected to increase. In this embodiment, in consideration of these problems, the detail level control unit 112 uses an octree to efficiently generate a shape model for the region where the object is present in the vast shape generation region. The octree is a hierarchical space representation method in which processing of dividing a voxel including an object or being a part of an object into eight fine voxels is repeated for a plurality of times. Details of this method will be described later. The detail level control unit 112 calculates the voxel size after one division.

The voxel definition unit 113 defines one or more voxels in the shape generation region in accordance with the voxel size set by the detail level control unit 112.

The depth of field determination unit 114 determines, based on the voxel size corresponding to the depth of field information and the number of octree divisions, whether each voxel is within the range of the depth of field of each camera. The depth of field of the camera will be described with reference to Fig. 2. Assume that the objects 211 to 213 are located on the field 201, and all of these objects are included in the angle of view of the camera 221. The depth of field is the range (focus range) over which the camera is in focus or at least can be considered to be in focus. The distance from the camera to the closest boundary position of the focus range is called the front depth of field, and the distance to the farthest boundary position is called the rear depth of field. Note that in Fig. 2, the front depth of field is indicated by a plane 231, and the rear depth of field is indicated by a plane 232. In Fig. 2, an image is captured in focus on the object 211 present within the range of the depth of field. On the other hand, since the objects 212 and 213 are present outside the range of the depth of field, blurred images are captured. The depth of field can be calculated based on the focal length. A formula for this is well known, so a description thereof is omitted here.

Based on the foreground image and the camera parameters, the voxel evaluation unit 115 evaluates whether the voxel constitutes a part of the object. The voxel evaluation shape generation apparatus 102 outputs, as a shape model, a set of voxels finally evaluated to constitute the object.

### (Procedure of Processing)

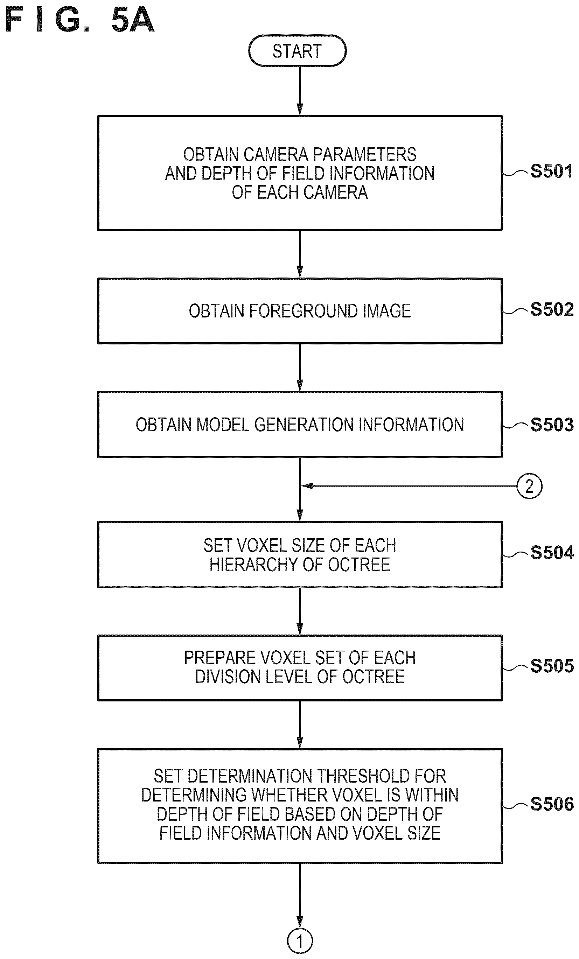

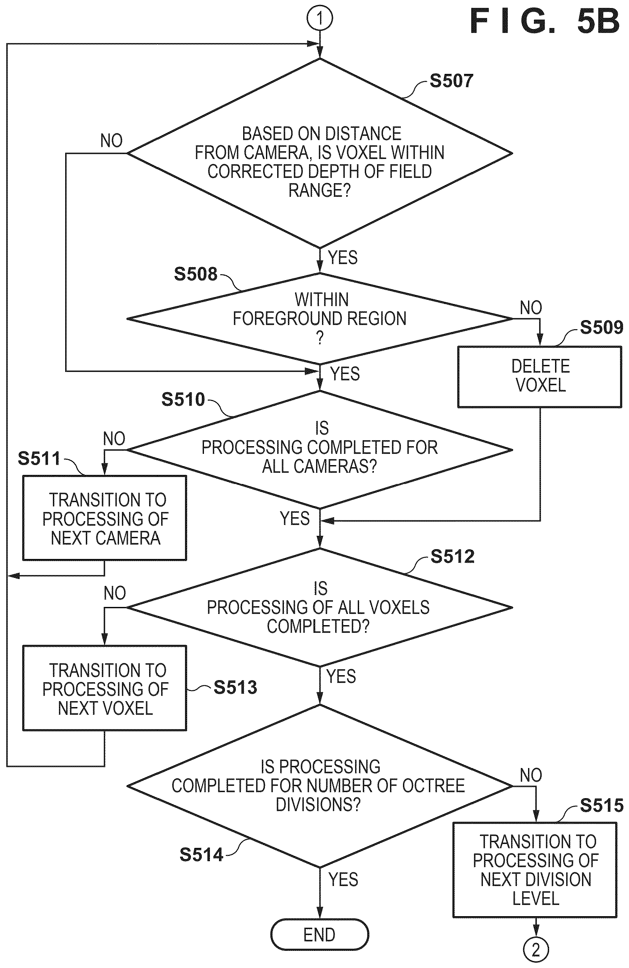

Next, an example of the procedure of processing executed by the shape generation apparatus 102 will be described with reference to Figs. 5A and 5B. Note that the processing executed in the shape generation apparatus 102 will be described below as an example with respect to the hardware arrangement shown in Fig. 3. Note that this is merely an example, and some processing steps can be implemented by dedicated hardware components. The processing steps described below may be reordered, or may be replaced with other processing steps that achieve a corresponding processing result. One processing step may be divided into a plurality of processing steps, or multiple processing steps may be executed as one processing step.

In step S501, the CPU 301 obtains camera parameters from the image capturing apparatus 101. Note that the camera parameters may be calculated by the CPU 301. The camera parameters need not be calculated every time a captured image is obtained from the image capturing apparatus 101, and only need to be calculated at least once before generating a shape model. Note that the camera parameter may be calibrated every time a predetermined number of captured images are obtained. The CPU 301 further obtains, as depth of field information, information indicating the front depth of field and the rear depth of field from the image capturing apparatus 101. These pieces of information also need to be obtained at least once before generating a shape model. Note that if the depth of field is changed, the CPU 301 can obtain depth of field information every time the depth of field is changed.

In step S502, the CPU 301 obtains a foreground image based on the captured image captured by the image capturing apparatus 101. The foreground image may be extracted by the image capturing apparatus 101, and in this case, the shape generation apparatus 102 may obtain the foreground image in place of or in addition to the captured image from the image capturing apparatus 101. Alternatively, the foreground image may be extracted by the CPU 301. In this case, the CPU 301 generates a silhouette image of the object from the obtained captured image. A silhouette image can be generated by a general method such as a background difference method of calculating the difference between a captured image obtained by capturing an object and a background image which does not include the object. In an example, in a case of generating a shape model for a sport match, a captured image obtained before the start of the match when the object is not in the field can be used as the background image. A method of generating a silhouette image is not limited to this. For example, a foreground image may be generated by using a method of recognizing an object (human body) and extracting the region of the object. Note that a silhouette image can be generated by deleting texture information from the foreground image. For example, a silhouette image is generated by setting a pixel value of 0 in the region where the object is not present, and setting a pixel value other than 0 in the object region.

In step S503, the CPU 301 obtains, as model generation information, pieces of information concerning the origin and size of the region (shape generation region) targeted for generation of the shape model, the minimum voxel size for constituting the shape model, and the maximum number of octree divisions. Note that these pieces of information can be obtained only once, for example, at the time of system activation. For example, the model generation information is described in a setting file or the like, and input to the system when reading the file at the time of activation. Note that in another example, the model generation information may be obtained repeatedly at a predetermined time cycle. Alternatively, the CPU 301 may periodically determine the presence/absence of information update, and obtain information again when the information is updated.

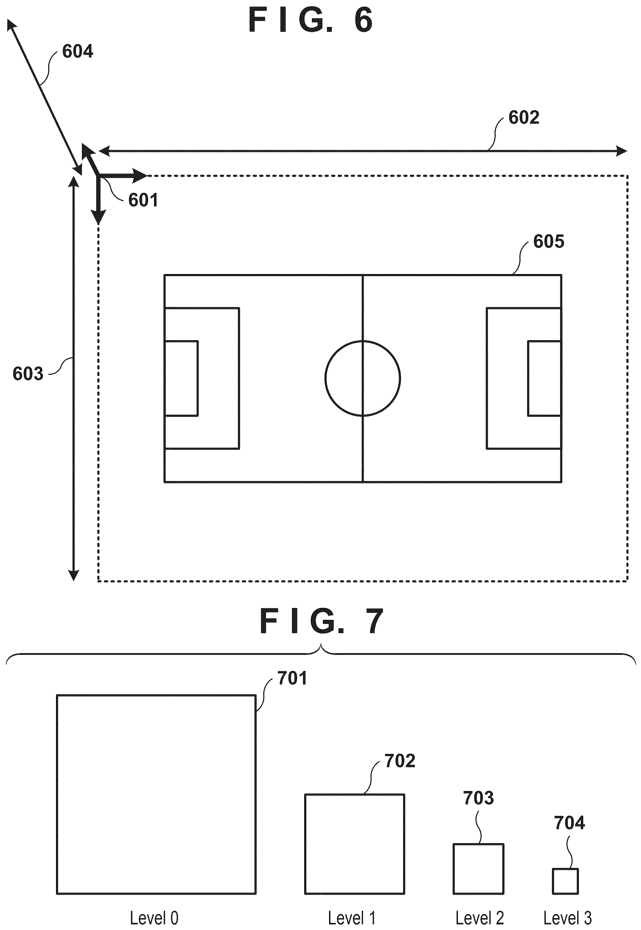

A shape generation region is represented by an origin 601, a region width 602, a region depth 603, and a region height 604 as shown in Fig. 6. The origin 601 of the shape generation region may be the same as the origin of the camera parameter in step S501, or may be a position translated from the origin of the camera parameter. For example, the size of the shape generation region is set to be sufficiently large for including the image capturing target region, such as a soccer ground 605. The minimum voxel size is related to the resolution for sampling the object region. The finer the voxel, the more the shape generation accuracy improves, and the more the quality of the finally generated virtual viewpoint video improves. However, the processing time for generating the shape model increases.

The minimum voxel size for constituting the shape model and the larger voxel sizes will be described with reference to Fig. 7. Fig. 7 schematically shows octree voxel division in a case where the maximum number of divisions is, for example, three. In Fig. 7, a voxel 701 that has never been divided is a voxel at division level 0 or in the initial state. A voxel 702 is a voxel at division level 1 obtained by dividing once the voxel 701 in the initial state. Similarly, a voxel 703 is a voxel at division level 2 obtained by dividing twice the voxel 701 in the initial state, and a voxel 704 is a voxel at division level 3 obtained by dividing three times the voxel 701 in the initial state. In this example, since the maximum number of divisions is three, the voxel 704 at division level 3 is the minimum voxel for constituting the three-dimensional shape. Here, the minimum voxel size is given as the model generation information as described above. In accordance with the minimum voxel size, the voxel size at each division level can be calculated.

Note that the subsequent processing from step S504 to step S513 is executed repeatedly for the number of octree divisions (step S514).

In step S504, the CPU 301 calculates and sets the voxel size in accordance with the division level. The voxel size is calculated by minimum voxel size × 2^(maximum number of divisions - division level). Note that 2^n represents 2ⁿ. For example, if the maximum number of divisions is set to 3, and the voxel of the minimum voxel size is set to a cube with a side length of 10 mm, a voxel at division level 0 is specified as a cube with a side length of 80 mm. As expressed by the above formula, with each increase in the division level, the voxel size is halved.

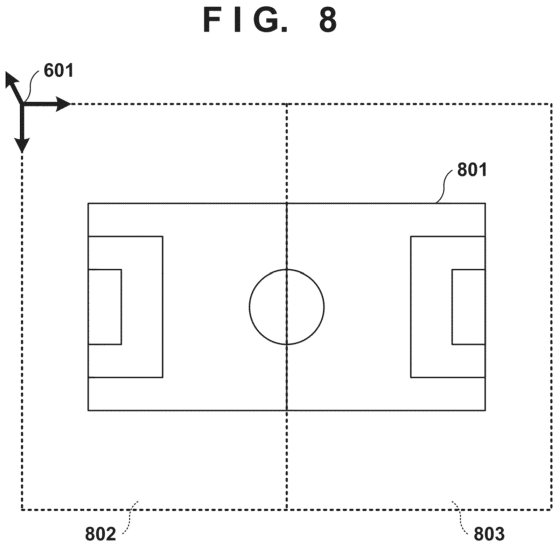

In step S505, the CPU 301 prepares a voxel set at each octree division level. For division level 0, the CPU 301 prepares a voxel set so as to cover the shape generation region. For example, in a case of generating a shape model for a soccer match, the standard size of a field 801 shown in Fig. 8 is 105 m × 68 m. If the minimum voxel size is set to 10 mm and the maximum number of divisions is set to 13, the voxel size at division level 0 is 81.92 m. By defining two voxels of a first voxel 802 and a second voxel 803 with respect to the origin 601, voxels that sufficiently cover the soccer field can be defined. Note that the number of voxels at division level 0 to be defined is not necessarily two, and the shape generation region may be covered with more voxels, such as voxels each having a voxel size that is, for example, half the above-described size. Each voxel holds, as a voxel value, information as to whether it is a voxel constituting the object. For example, assume that a voxel which does not constitute and include the object holds a voxel value of 0, and a voxel which constitutes or includes the object holds a voxel value of 1. At division level 1, voxels obtained by subdividing the voxel, which holds a voxel value of 1 as a result of processing at division level 0, are defined.

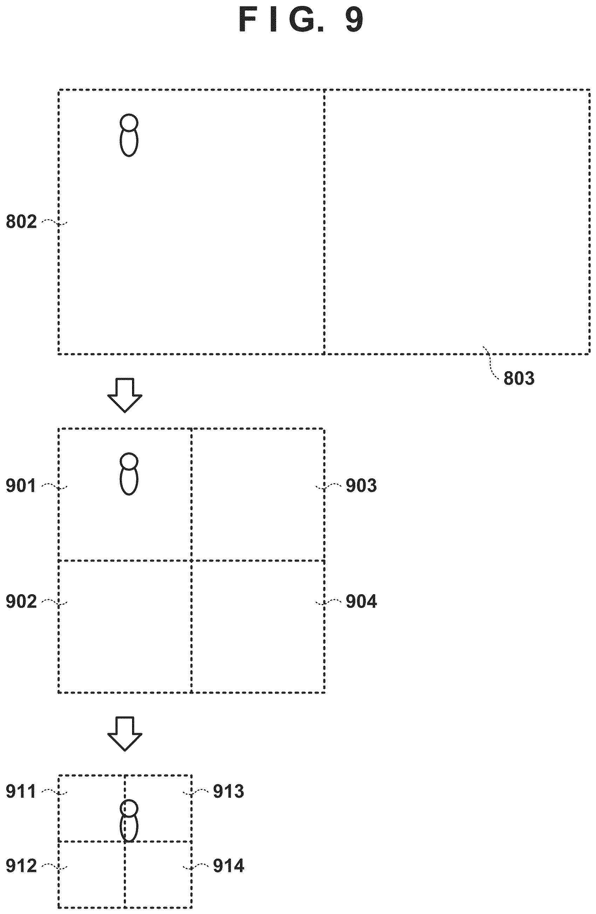

For example, Fig. 9 is a schematic view for explaining a method of dividing a voxel into eight fine voxels stepwise in octree processing. The processing is performed on a voxel basis in a three-dimensional space (a space defined by three axes of the X-axis, Y-axis, and Z-axis). However, for the sake of descriptive simplicity, a description will be given here using a quadrangle (a plane defined by the X-axis and Y-axis) which is the voxel (cube) when viewed from above. Fig. 9 shows an example in which the object is present in the voxel 802 but not in the voxel 803. In this case, only the voxel 802 is subdivided and the voxel 803 is not subdivided. The voxel 802 is divided into to two parts along each of the X-axis direction and the Y-axis direction, and four voxels at division level 1 including a voxel 901, a voxel 902, a voxel 903, and a voxel 904 are defined. In this example, the object is present in the voxel 901 but not in the voxels 902 to 904. Accordingly, only the voxel 901 is divided, and four voxels at division level 2 including a voxel 911, a voxel 912, a voxel 913, and a voxel 914 are defined. In this manner, each time the division level is increased, only the voxel including or constituting the object is subdivided, and new voxels are defined. The CPU 301 executes the processing repeatedly until voxels having the set minimum voxel size are obtained. With this, in a vast shape generation region, it is possible to efficiently represent the region where the object is not present using a large voxel size, and represent only the region where the object is present in detail, thereby efficiently generating the shape model of the entire shape generation region.

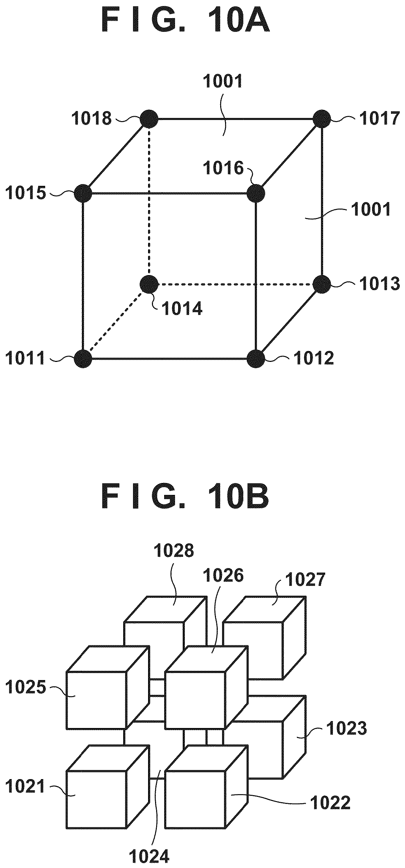

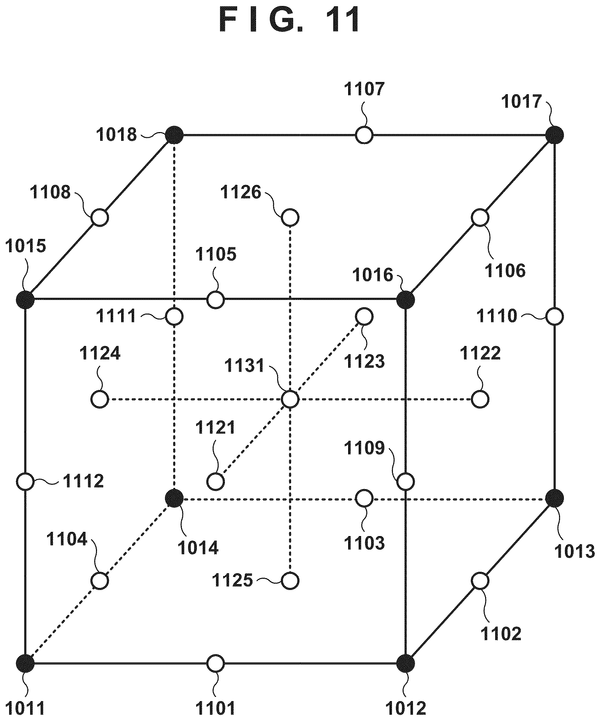

A method of dividing one voxel into eight fine voxels will be described with reference to Figs. 10A to 11. Fig. 10A shows a voxel 1001 having a cube shape, which is to be divided, and its eight vertices 1011 to 1018. When the voxel 1001 shown in Fig. 10A is divided once, eight fine voxels 1021 to 1028 are generated as shown in Fig. 10B. The vertices of the voxels which are newly generated by the division are shown in Fig. 11. The positions where new vertices are generated include midpoints 1101 to 1112 of sides each formed by two vertices of the voxel 1001, center points 1121 to 1126 of faces each formed by four vertices, and a center point 1131 of the voxel. The voxel after the division is defined using the vertex of the voxel before the division and the newly generated vertices. For example, the voxel 1021 is defined using the vertex 1011 of the voxel before the division and seven newly generated vertices 1101, 1125, 1104, 1112, 1121, 1131, and 1124. The voxel 1022 is defined using the vertex 1012 of the voxel before the division and newly generated vertices 1102, 1125, 1101, 1109, 1122, 1131, and 1121. The voxel 1023 is defined using the vertex 1013 of the voxel before the division and newly generated vertices 1103, 1125, 1102, 1110, 1123, 1131, and 1122. The voxel 1027 is defined using the vertex 1017 of the voxel before the division and newly generated vertices 1107, 1126, 1106, 1110, 1123, 1131, and 1122. Since the voxel 1021 and the voxel 1022 are adjacent to each other via a face, they are defined to share four vertices (vertices 1121, 1101, 1125, and 1131). Since the voxel 1021 and the voxel 1023 are adjacent to each other via a side, they are defined to share two vertices (vertices 1131 and 1125). Since the voxel 1021 and the voxel 1027 are adjacent to each other via a point, they are defined to share one vertex (vertex 1131). As described above, by octree division, new vertices are generated in the voxel, and eight voxels are defined from one voxel.

In step S506, based on the depth of field information obtained in step S501 and the voxel size set in step S504, the CPU 301 sets a threshold value to be used in determination as to whether each voxel is included in the range of the depth of field.

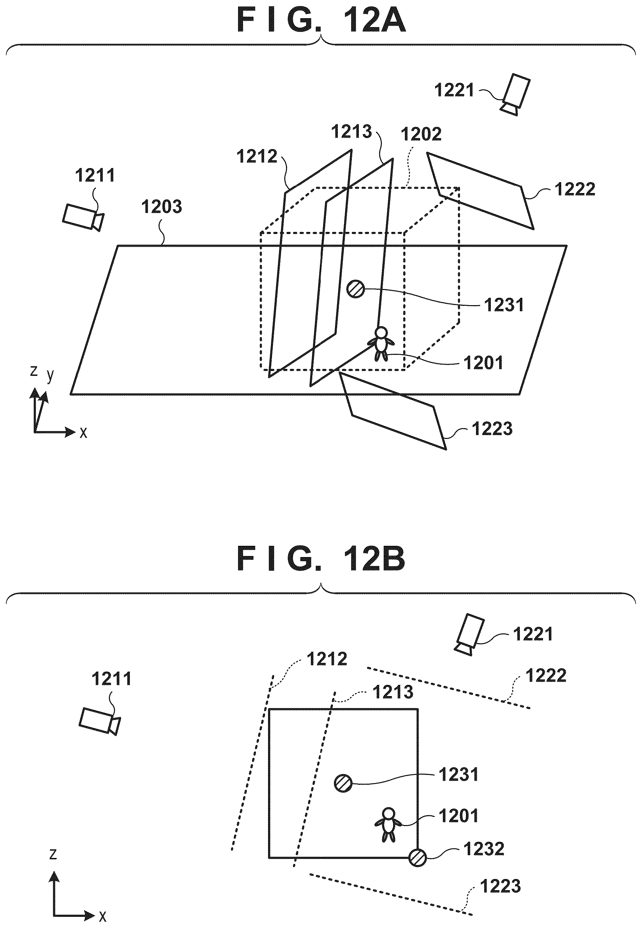

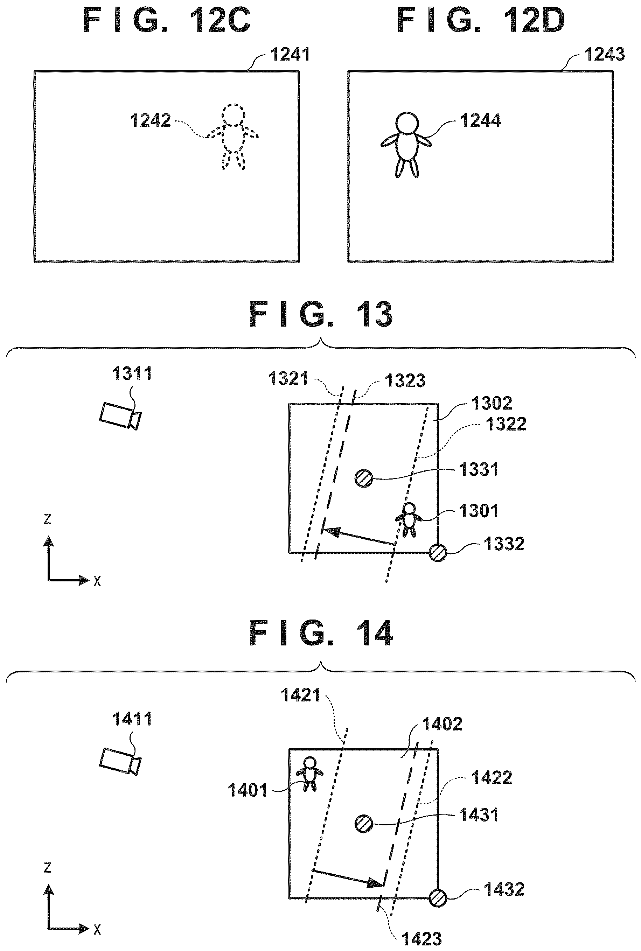

First, the shape model generation processing considering the depth of field will be described with reference to Figs. 12A to 12D. Fig. 12A is a schematic view showing the depth of field of a camera in three dimensions (XYZ space), and Fig. 12B is a schematic view showing the camera and the depth of field in two dimensions (XZ plane). In the example shown in Fig. 12A, an object 1201, a voxel 1202, and a field 1203 such as a soccer field are shown. A camera 1211 is installed to capture the field 1203, and its front depth of field and rear depth of field are indicated by planes 1212 and 1213, respectively. Similarly, a camera 1221 is installed to capture the field 1203, and its front depth of field and rear depth of field are indicated by planes 1222 and 1223, respectively. Figs. 12C and 12D show examples of captured images captured by the cameras 1211 and 1221, respectively, in the state shown in Fig. 12A. In Fig. 12A, since the object 1201 is present at a position farther than the rear depth of field when viewed from the camera 1211, the image of the object 1201 appearing in a captured image 1241 (Fig. 12C) of the camera 1211 is blurred. Hence, it is assumed that a foreground region 1242 is not extracted or the region is partially missing in the captured image 1241. On the other hand, since the object 1201 is present at a position farther than the plane 1222 indicating the front depth of field and closer than the plane 1223 indicating the rear depth of field, the object 1201 appears clearly in a captured image 1243 (Fig. 12D) of the camera 1221. Hence, it is assumed that a foreground region 1244 is successfully extracted (no defect occurs in the foreground region) in the captured image 1243.

In shape-from-silhouette, if a coordinate point obtained by projecting an arbitrary coordinate point inside a voxel to a camera image is present within a foreground region, it is determined that the voxel constitutes a part of the object (the voxel is not to be deleted). The determination method will be described later with respect to step S508. As the coordinate point to be projected, a center point 1231 of the voxel 1202 as shown in Fig. 12A can be used. For a given voxel, as a result of projection to all cameras, if the voxel is determined to be present within the foreground region for all the cameras, the voxel is determined to constitute a part of the object. On the other hand, if the voxel is determined not to be present in the foreground region for at least one of the cameras, the voxel is determined not to constitute the object. This determination may be referred to as voxel deletion determination hereinafter. In a case of shape-from-silhouette, in a scene as shown in Fig. 12A, if a defect occurs in the foreground region 1242 for the camera 1211, the voxel is projected in the range of the foreground region including the defect for the camera 1211, so that a defect can also occur in the three-dimensional model of the object 1201. Therefore, in this embodiment, if an object is located outside the range of the depth of field of a camera so that extraction of the foreground region is likely to be failed, this camera is not used in voxel deletion determination. That is, the camera for which the object is located outside the range of the depth of field is not used in voxel projection and determination as to whether the voxel is in the range of the foreground region. For this, for each voxel, it is determined whether the voxel is located within the range of the depth of field of each camera. Then, the shape generation apparatus 102 decides to use the camera for which the voxel is located within the range of the depth of field in voxel deletion determination, and not to use the camera for which the voxel is located outside the range of the depth of field in voxel deletion determination. A method of determining whether the voxel 1202 fits in the depth of field of the camera 1211 will be described later with reference to step S507.

Next, a difference in shape-from- silhouette processing considering the depth of field between the scene as shown in Fig. 12B and the scene as shown in Fig. 13 will be described. In a case of the scene as shown in Fig. 12A, the center point 1231 of the voxel is evaluated to be farther than the rear depth of field 1213 of the camera 1211, so that the voxel 1202 is determined to be outside the range of the depth of field. As a result, the camera 1211 is not used in voxel deletion determination. On the other hand, for the camera 1221, since the center point 1231 is farther than the front depth of field 1222 and closer than the rear depth of field 1223, the voxel 1202 is determined to be within the range of the depth of field. As a result, the camera 1221 is used in voxel deletion determination. Since the camera 1211 for which the object 1201 is located outside the range of the depth of field so that a defect occurs in the foreground region is not used in voxel deletion determination, incorrect deletion of the voxel can be prevented, which is caused by projecting the voxel to the foreground region with a defect. Thus, it is possible to prevent a defect or the like in the generated shape model. On the other hand, in a case of the scene as shown in Fig. 13, a center point 1331 of the voxel is evaluated to be farther than a front depth of field 1321 of a camera 1311 and closer than a rear depth of field 1322. As a result, even though an object 1301 is present outside the range of the depth of field of the camera 1311, a voxel 1302 is determined to be within the range of the depth of field, and the camera 1311 is used in voxel deletion determination. In this manner, in the scene as shown in Fig. 13, the camera 1311 for which the object is located outside the range of the depth of field so that a defect can occur in the foreground region is used in voxel deletion determination, so that a defect can also occur in the three-dimensional shape model to be generated.

As described above, in shape-from-silhouette processing considering the depth of field, if a voxel is determined to be within the range of the depth of field even though the object is present outside the range of the depth of field, this can affect the quality of the three-dimensional shape model to be generated. To prevent this, in this embodiment, a technique is provided in which, not only for a scene as shown in Fig. 12B but also for a scene as shown in Fig. 13, if an object is located outside the range of the depth of field, the voxel is determined to be outside the range of the depth of field. This can prevent the camera 1211 and the camera 1311 from being used in voxel deletion determination in the scenes as described above, thereby preventing a defect in a shape model.

To achieve this, the CPU 301 sets, while considering the size of the voxel, threshold values to be applied to the front depth of field and the rear depth of field to determine whether each voxel is present within the range of the depth of field. First, a method of setting a threshold value for a determination based on the rear depth of field will be described with reference to Fig. 13. In the scene as shown in Fig. 13, even though the object 1301 is present behind the rear depth of field 1322 when viewed from the camera 1311, the voxel 1302 is determined to be present within the range of the depth of field. In such a situation, a reason why the object 1301 is determined to be present within the range of the depth of field is that the determination is made based on the center point 1331 of the voxel 1302. That is, when the object is located far from the center point of the voxel, if it is determined whether the voxel is present within the range of the depth of field while using the center point, the object, which is originally present outside the range of the depth of field, is determined to be present within the range of the depth of field. Therefore, in this embodiment, in the example as shown in Fig. 13, the distance from the center point 1331 of the voxel 1302 to a corner 1332 of the voxel where the object can be farthest is treated as the maximum error in the determination as to whether the voxel is present within the range of the depth of field, and reflected on the threshold value. The threshold value is calculated based on the front depth of field information obtained in step S501 and the voxel size set in step S503. In this embodiment, since the voxel is a cube, the coordinate point of any one of eight vertices may be used for calculation of the threshold value. The threshold value for determining whether the voxel is present closer than the rear depth of field when viewed from the camera is set to a value obtained by subtracting the length from the corner of the voxel to the center point from the distance between the camera and the rear depth of field. The length from the corner of the voxel to the center point can be calculated by L ×(√3)/2 where L is the voxel size (side length) at each division level. Note that √3 is the square root of 3. That is, in this embodiment, letting L0 be the distance between the camera and the rear depth of field, if the distance between the camera and the center point of the voxel is larger than L0 - L ×(√3)/2, the voxel is determined to be present behind the rear depth of field when viewed from the camera. That is, the threshold value for determining whether the voxel is present behind the rear depth of field when viewed from the camera is corrected as shown in Fig. 13, and a determination is made assuming that the rear depth of field is located at the position of a corrected rear depth of field 1323. Accordingly, for example, in Fig. 13, the center point 1331 of the voxel 1302 is determined to be present behind the corrected rear depth of field 1323 when viewed from the camera 1311. As a result, in a situation where the object 1301 is present behind the rear depth of field 1322 when viewed from the camera 1311, it is possible to prevent the voxel 1302 from being determined to be present within the range of the depth of field. Note that in a case where the voxel does not have a cube shape, the longest distance from the surface of the voxel to the center point of the voxel can be used in place of the above-described length from the corner of the voxel to the center point. Alternatively, the average value or median of the distance between the center point of the voxel and a point on each surface may be used in place of the above-described length from the corner of the voxel to the center point. Alternatively, for example, the length obtained by multiplying the distance between the center point of the voxel and the corner of the voxel by a predetermined coefficient may be used in place of the above-described length from the corner of the voxel to the center point.

Next, a method of setting a threshold value for a determination based on the front depth of field will be described with reference to Fig. 14. In the scene as shown in Fig. 14, even though an object 1401 is present in front of a front depth of field 1421 when viewed from a camera 1411, a voxel 1402 is determined to be present within the range of the depth of field. A reason why the object 1401 is determined to be present within the range of the depth of field is that the determination is made based on a center point 1431 of the voxel 1402. Therefore, in this embodiment, in the example as shown in Fig. 14, the distance from the center point 1431 of the voxel 1402 to a corner 1432 of the voxel where the object can be farthest is treated as the maximum error in the determination as to whether the voxel is present within the range of the depth of field, and reflected on the threshold value. The threshold value is calculated based on the front depth of field information obtained in step S501 and the voxel size set in step S503. The threshold value for determining whether the voxel is present behind the front depth of field when viewed from the camera is set to a value obtained by adding the length between the corner of the voxel and the center point to the distance between the camera and the front depth of field. In this embodiment, as in the example described above, the length from the corner of the voxel to the center point can be calculated by L ×(√3)/2 where L is the voxel size (side length) at each division level. That is, in this embodiment, letting L1 be the distance between the camera and the front depth of field, if the distance between the camera and the center point of the voxel is smaller than L1 + L ×(√3)/2, the voxel is determined to be present in front of the front depth of field when viewed from the camera. That is, the threshold value for determining whether the voxel is present in front of the front depth of field when viewed from the camera is corrected as shown in Fig. 14, and a determination is made assuming that the front depth of field is located at the position of a corrected front depth of field 1423. Accordingly, for example, in Fig. 14, the center point 1431 of the voxel 1402 is determined to be present in front of the corrected front depth of field 1423 when viewed from the camera 1411. As a result, in a situation where the object 1401 is present in front of the front depth of field 1421 when viewed from the camera 1411, it is possible to prevent the voxel 1402 from being determined to be present within the range of the depth of field.

By performing threshold value correction as described above, the number of cases where the voxel, that is determined to be present within the range of the depth of field in a conventional method, is determined to be present outside the range of the depth of field increases, but the probability of occurrence of incorrect voxel deletion can be reduced. For example, for the voxel 802 shown in Fig. 9, if a camera for which the object is not present within the range of the depth of field is considered, the voxel 802 is projected outside the foreground region of the camera, and the voxel 802 is treated as the voxel where the object is not present. The voxel where the object is not present is not subject to subsequent division and further processing, so the voxels 901 to 904 are not obtained. Accordingly, the highly accurate shape model of the object cannot be obtained. To the contrary, by performing threshold correction as described above, a camera for which the object is present outside the range of the depth of field is not considered, and the voxel 802 is reliably specified as the voxel where the object is present. Accordingly, the voxel 802 is divided into the voxels 901 to 904, and the voxel 901 is divided into the voxels 911 to 914. Owing to these further divisions, a highly accurate shape model is generated. At this time, as the octree voxel division processing proceeds, the length between the corner of the voxel and the center point decreases. That is, as the division processing proceeds, the deviation between the object position and the center point decreases, and the accuracy in determination as to whether the object is present within the range of the depth of field improves. Even if the object is determined to be present outside the range of the depth of field at a rough octree division level, a highly accurate determination of the depth of field is performed at the division level corresponding to the minimum voxel level. Therefore, the resulting three-dimensional shape model takes the depth of field into consideration with high accuracy, and a highly accurate shape model can be obtained. Note that in the example described above, the threshold value is corrected based on the depth of field, and the camera for which the object is determined to be present outside the range of the depth of field is not used in voxel deletion determination. However, this is merely an example. For example, not the range of the depth of field but the coordinate point of the center point of the voxel may be corrected. For example, upon the determination based on the front depth of field, the coordinate point of the center point of the voxel is moved in a frontward direction along the optical axis of the camera to obtain the first corrected center point. Then, upon the determination based on the rear depth of field, the coordinate point of the center point of the voxel is moved in a rearward direction along the optical axis of the camera to obtain the second corrected center point. Note that the moving distance can be equal to the length from the corner of the voxel to the center point as described above. With this, in a case where the first corrected center point is present in front of the front depth of field and the second corrected center point is present behind the rear depth of field, the voxel can be determined not to be present within the range of the depth of field. That is, if the distance between the first corrected center point and the camera is shorter than the distance indicating the front depth of field and the distance between the second corrected center point and the camera is longer than the distance indicating the rear depth of field, the voxel is determined not to be present within the range of the depth of field. To the contrary, if the first corrected center point is present behind the front depth of field and the second corrected center point is present in front of the rear depth of field, the voxel can be determined to be present within the range of the depth of field. This method can also provide an effect similar to that in the example described above. Note that in this embodiment, the example is described in which the center point of the voxel is used to determine whether the voxel is present within the range of the depth of field, but the present disclosure is not limited to this. For example, another point such as the centroid point or the like of the voxel may be used as a representative point, and the voxel may be determined to be present within the range of the depth of field if the representative point is present within the range of the depth of field.

Referring back to Figs. 5A and 5B, after the threshold value for depth of field determination is set in step S506, the processing from step S507 to step S511 is repeatedly executed in which each voxel prepared in step S505 is projected with respect to all the cameras to determine whether the voxel constitutes a part of the object.

In step S507, the CPU 301 calculates the distance from the camera to the voxel and determines, using the threshold value obtained as described above, whether the voxel is included within the range of the corrected depth of field. For this determination, the CPU 301 compares, for example, the three-dimensional distance from the camera position of the camera 1211 and the center point 1231 shown in Figs. 12A and 12B with the threshold values for the corrected front depth of field and rear depth of field obtained in step S506. If the distance is larger than the threshold value for the front depth of field and smaller than the threshold value for the rear depth of field, the voxel is determined to be present within the range of the depth of field. Otherwise, the voxel is determined to be present outside the range of the depth of field. If the threshold value for the front depth of field exceeds the threshold value for the rear depth of field, the CPU 301 determines that the voxel is present outside the range of the depth of field. If the voxel is determined to be present outside the range of the depth of field, the CPU 301 determines in step S510 whether the processing is completed for all the cameras. If it is determined that the processing is not completed for all the cameras, in step S511, the CPU 301 changes the processing target to the camera (for example, the camera 1221) in an unprocessed state, and executes similar determination processing. If it is determined in step S510 that the processing is completed for all the cameras, the CPU 301 determines in step S512 whether the processing is completed for all the voxels at the division level currently targeted for the processing. Note that if the voxel is determined to be present outside the range of the depth of field for all the cameras, the CPU 301 determines that the voxel is not a part of the object. However, if the threshold value for the front depth of field exceeds the threshold value for the rear depth of field for all the cameras, the CPU 301 may determine that the voxel includes the object, and may execute determination again at the next division level. That is, in a case where the voxel size is very large and the width of the depth of field before correction is relatively narrow, the threshold value for the front depth of field exceeds the threshold value for the rear depth of field. In this case, even if the object is present within the range of the depth of field before correction, the voxel is determined not to be present within the range of the corrected depth of field, so that the object is determined not to be present in the voxel. Therefore, such a voxel is temporarily treated as the voxel in which the object is present, and determination is executed again in a state in which the voxel is divided into fine voxels. When the voxel size is decreased, the threshold value for the front depth of field does not exceed the threshold value for the rear depth of field, and it is possible to accurately determine whether the object is present in the voxel.

If it is determined in step S507 that the voxel is present within the range of the depth of field of the camera targeted for the processing, in step S508, the CPU 301 projects the voxel to the camera to evaluate whether the voxel is in the foreground region. For this evaluation, with respect to the camera targeted for the processing, the CPU 301 first projects the center point of the voxel to the camera using the camera parameters, thereby calculating a distance d from the camera to each voxel. To calculate the distance d, world coordinate point Xw of the center point of the voxel is multiplied by an extrinsic matrix Te to obtain a coordinate point Xc of the voxel in the camera coordinate system. Te is a conversion matrix formed from the extrinsic parameters of the camera. If a direction in which the lens of the camera faces corresponds to a positive range of the z-axis of the camera coordinate system by setting the camera position as the origin, the z-coordinate of Xc indicates the distance d when the point is viewed from the camera. Next, the CPU 301 calculates an image coordinate point Xi of Xc. Xi is calculated by multiplying, by an intrinsic matrix Ti, a normalized camera coordinate point obtained by normalizing Xc by the z-coordinate. Ti is a matrix formed from the intrinsic parameters of the camera. If the pixel value at the image coordinate point Xi is a pixel value indicating the foreground region, the CPU 301 determines that the voxel is projected within the foreground region of the camera targeted for the processing. If it is determined that the voxel targeted for the processing is projected within the foreground region of the camera targeted for the processing, the CPU 301 determines in step S510 whether the processing is completed for all the cameras. If it is determined that the processing is not completed for all the cameras, the CPU 301 changes the processing target to the camera (for example, the camera 1221) in an unprocessed state in step S511, and repeats the processing from the determination processing in step S507.

Note that in the processing described above, the example has been described where the center point of a voxel is used to evaluate whether the voxel is projected within the foreground region. However, if the evaluation is performed only with respect to the center point, the larger the voxel is than the image resolution of the camera, the more likely it is that an error occurs in the evaluation. That is, since points other than the center point are not evaluated, the object that is originally included in the voxel is treated as not being present, and this may result in an inappropriate generation of the shape model of the object. It is possible to define finer voxels in the voxel to evaluate whether the object is present within the voxel, but the processing time can increase in this case. Therefore, a well-known method other than the method described above may be used, such as, for example, a method of generating an integral image in each camera and performing evaluation using the eight vertices of a voxel, or a method of generating a multi-resolution image and using a captured image with an appropriate resolution in accordance with the voxel size. Any of these methods may be used, or a combination of several methods may be used. By using several methods, it is possible to appropriately evaluate whether a voxel is projected within the foreground region. Note that the method of generating and using an integral image or a multi-resolution image is well known, and a description thereof will be omitted here.

If it is determined in step S508 that the voxel targeted for the processing is projected outside the range of the foreground region of the camera targeted for the processing, in step S509, the CPU 301 deletes the voxel targeted for the processing. That is, the CPU 301 sets, as the voxel value of the voxel, a value (for example, 0) indicating that the voxel is present outside the object region. In this case, even if the determination processing in steps S507 and S508 is performed for other cameras, the voxel value does not become another value. Therefore, the CPU 301 completes the processing for the voxel even if there is a camera in the unprocessed state. Then, the CPU 301 determines in step S512 whether the processing is completed for all the voxels at the division level currently targeted for the processing. If the processing is not completed for all the voxels, the CPU 301 changes the voxel targeted for the processing to the unprocessed voxel in step S513, and repeats the processing from step S507.

Unless the voxel targeted for the processing is deleted in step S509, the CPU 301 repeats the determination in step S508 with respect to all the cameras. That is, if the voxel targeted for the processing is determined to be projected within the foreground region of the camera in step S508, and it is determined that there is an unprocessed camera in step S510, in step S511, the CPU 301 changes the processing target to the camera in the unprocessed state, and repeats the processing. Then, if the voxel is determined to be projected within the foreground region for all the cameras, the CPU 301 sets the value of the voxel to, for example, a value (for example, 1) indicating the object region.

After determining in step S512 whether the above-described processing is completed for all combinations of the voxels and the cameras defined at the division level targeted for the processing, the CPU 301 determines in step S514 whether the processing is completed for the number of times corresponding to the set maximum number of divisions. Note that in step S514, for example, it may be determined whether the voxel size has reached the set minimum voxel size. If it is determined in step S514 that the processing is not completed for the voxels divided by the maximum number of divisions, the CPU 301 increases the division level by one in step S515 and returns the processing to step S504. Note that after the division level is increased by one, the CPU 301 divides only the voxel set with a value indicating the object region in step S504, and does not execute the processing for the voxel set with a value indicating outside the object region. With this, it is possible to prevent unnecessary division processing. If it is determined in step S514 that the processing is completed for the voxels divided by the maximum number of divisions, the CPU 301 completes the processing.

As described above, in this embodiment, based on the voxel size corresponding to the octree division level, the threshold value for the front depth of field and the threshold value for the rear depth of field are corrected, and it is decided, using the corrected threshold values, whether the camera is used in voxel deletion determination. With this, it is possible to prevent that the voxel including the object outside the range of the depth of field is determined to be present within the range of the depth of field. Hence, it is possible to prevent that the camera having captured the object outside the range of the depth of field is used in voxel deletion determination for the voxel. As a result, the unclear foreground image based on the captured image where the object appears unclearly is not used in voxel deletion determination, so that it can be prevented that the voxel including the object is determined to be the voxel not including the object and deleted. This can prevent occurrence of a defect in the shape model of the object, thereby generating the highly accurate shape model.

According to the present disclosure, it is possible to highly accurately generate the shape model of an object without any defect.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A shape generation apparatus (102), comprising:
obtainment means (111) for obtaining, for each of a plurality of image capturing apparatuses (101) which capture an object from directions different from each other, a parameter including a depth of field of the image capturing apparatuses, and a foreground image generated by extracting a foreground region from a captured image captured by the image capturing;
setting means (113) for setting set a plurality of voxels in a space captured by the plurality of image capturing apparatuses;
correction means (112) for correcting a detecting area based on a size of the voxel and the parameter so that the detecting area is narrowed than the depth of field of the image capturing apparatuses;
first determination means (114) for determining whether a first voxel included in the plurality of voxels is included within a range of the corrected detecting area; and
second determination means (115) for determining whether to delete the first voxel using the foreground image corresponding to the image capturing apparatus for which the first voxel is determined to be included within the range of the corrected detecting area.

2. The apparatus according to claim 1, wherein
the setting means sets a plurality of new voxels by dividing the voxel evaluated to include the object,
the correction means corrects the parameter based on a size of the new voxel,
the first determination means determines whether the new voxel is included within a range of the corrected detecting area, and
it is determined whether to delete the new voxel using the foreground image corresponding to the image capturing apparatus for which the new voxel is determined to be included within the range of the corrected detecting area.

3. The apparatus according to claim 1 or 2, wherein
the voxel has a shape of a cube, and
the first determination means determines whether the first voxel is included within the range of the corrected detecting area based on a predetermined value that is a value corresponding to a distance between a vertex of the cube and a center point of the cube.

4. The apparatus according to any one of claims 1 to 3, wherein
in a case where, with respect to all of the image capturing apparatuses for which the voxel is determined to be included within the range of the corrected detecting area, a point obtained by projecting the voxel is included in a foreground region of the foreground image corresponding to each of the image capturing apparatuses, the voxel is determined to include an object, and in a case where, with respect to any of the image capturing apparatuses for which the voxel is determined to be included within the range of the corrected detecting area, a point obtained by projecting the voxel is not included in a foreground region of the foreground image corresponding to each of the image capturing apparatuses, the voxel is determined not to include an object.

5. The apparatus according to any one of claims 1 to 4, wherein
the obtainment means obtains, from each of the plurality of image capturing apparatuses, a captured image captured by the image capturing apparatus, and generates the foreground image by extracting the foreground region from the captured image.

6. The apparatus according to any one of claims 1 to 4, wherein
the obtainment means obtains, from each of the plurality of image capturing apparatuses, the foreground image obtained by extracting the foreground region from a captured image by the image capturing apparatus.

7. A shape generation apparatus (102), comprising
obtainment means (111) for obtaining, for each of a plurality of image capturing apparatuses (101) which capture an object from directions different from each other, a parameter including a depth of field concerning image capturing, and a foreground image generated by extracting a foreground region from a captured image captured by the image capturing;
defining means (113) for defining not less than one voxel in a space captured by the plurality of image capturing apparatuses;
determination means (114) for, for each of the not less than one voxel and each of the plurality of image capturing apparatuses, determining that the voxel is included within a range of a depth of field of the image capturing apparatus in a case where a distance between the image capturing apparatus and a first point obtained by moving a representative point of the voxel by a distance corresponding to a size of the voxel in a frontward direction along an optical axis of the image capturing apparatus is longer than a front depth of field, which is a distance to a boundary of the depth of field of the image capturing apparatus close to the image capturing apparatus, and a distance between the image capturing apparatus and a second point obtained by moving the representative point by the distance corresponding to the size of the voxel in a rearward direction along an optical axis of the image capturing apparatus is shorter than a rear depth of field, which is a distance to a boundary of the depth of field of the image capturing apparatus far from the image capturing apparatus; and
generation means (115) for, for each of the not less than one voxel and each of the plurality of image capturing apparatuses, generating a three-dimensional shape model of an object by evaluating whether the voxel includes the object by using the foreground image corresponding to the image capturing apparatus for which the voxel is determined to be included within the range of the depth of field and not using the foreground image corresponding to the image capturing apparatus for which the voxel is determined not to be included within the range of the depth of field.

8. The apparatus according to claim 7, wherein
the defining means defines a plurality of new voxels by dividing the voxel evaluated to include the object, and
for each combination of each of the new voxels and each of the plurality of image capturing apparatuses,
the determination means determines that the new voxel is included within a range of the depth of field of the image capturing apparatus in a case where a distance between the image capturing apparatus and a third point obtained by moving a representative point of the new voxel by a distance corresponding to a size of the new voxel in a frontward direction along an optical axis of the image capturing apparatus is longer than the front depth of field, which is a distance to a boundary of the depth of field of the image capturing apparatus close to the image capturing apparatus, and a distance between the image capturing apparatus and a fourth point obtained by moving the representative point by the distance corresponding to the size of the new voxel in a rearward direction along an optical axis of the image capturing apparatus is shorter than a rear depth of field, which is a distance to a boundary of the depth of field of the image capturing apparatus far from the image capturing apparatus, and
the generation means evaluates whether the new voxel includes an object by using the foreground image corresponding to the image capturing apparatus for which the new voxel is determined to be included within the range of the depth of field and not using the foreground image corresponding to the image capturing apparatus for which the new voxel is determined not to be included within the range of the depth of field.

9. The apparatus according to claim 7 or 8, wherein
the voxel has a shape of a cube, and
the distance corresponding to the size of the voxel is a distance corresponding to a distance between a vertex of the cube and a center point of the cube.

10. The apparatus according to any one of claims 7 to 9, wherein
the generation means determines that the voxel includes an object in a case where, with respect to all of the image capturing apparatuses for which the voxel is determined to be included within the range of the depth of field, a point obtained by projecting the voxel is included in a foreground region of the foreground image corresponding to each of the image capturing apparatuses, and determines that the voxel does not include an object in a case where, with respect to any of the image capturing apparatuses for which the voxel is determined to be included within the range of the depth of field, a point obtained by projecting the voxel is not included in a foreground region of the foreground image corresponding to each of the image capturing apparatuses.

11. The apparatus according to any one of claims 7 to 10, wherein
the obtainment means obtains, from each of the plurality of image capturing apparatuses, a captured image captured by the image capturing apparatus, and generates the foreground image by extracting the foreground region from the captured image.

12. The apparatus according to any one of claims 7 to 11, wherein
the obtainment means obtains, from each of the plurality of image capturing apparatuses, the foreground image obtained by extracting the foreground region from a captured image by the image capturing apparatus.

13. A control method executed by a shape generation apparatus, comprising:
obtaining (S501, S502), for each of a plurality of image capturing apparatuses which capture an object from directions different from each other, a parameter including a depth of field of the image capturing apparatuses, and a foreground image generated by extracting a foreground region from a captured image captured by the image capturing;
setting (S505) a plurality of voxels in a space captured by the plurality of image capturing apparatuses;
correcting (S506) a detecting area based on a size of the voxel and the parameter so that the detecting area is narrowed than the depth of field of the image capturing apparatuses;
determining (S507) whether a first voxel included in the plurality of voxels is included within a range of the corrected detecting area; and
determining (S509) whether to delete the first voxel using the foreground image corresponding to the image capturing apparatus for which the first voxel is determined to be included within the range of the corrected detecting area.

14. A control method executed by a shape generation apparatus, comprising:
obtaining (S501, S502), for each of a plurality of image capturing apparatuses which capture an object from directions different from each other, a parameter including a depth of field concerning image capturing, and a foreground image generated by extracting a foreground region from a captured image captured by the image capturing;
defining (S505) not less than one voxel in a space captured by the plurality of image capturing apparatuses;
for each of the not less than one voxel and each of the plurality of image capturing apparatuses,
determining (S507) that the voxel is included within a range of a depth of field of the image capturing apparatus in a case where a distance between the image capturing apparatus and a first point obtained by moving a representative point of the voxel by a distance corresponding to a size of the voxel in a frontward direction along an optical axis of the image capturing apparatus is longer than a front depth of field, which is a distance to a boundary of the depth of field of the image capturing apparatus close to the image capturing apparatus, and a distance between the image capturing apparatus and a second point obtained by moving the representative point by the distance corresponding to the size of the voxel in a rearward direction along an optical axis of the image capturing apparatus is shorter than a rear depth of field, which is a distance to a boundary of the depth of field of the image capturing apparatus far from the image capturing apparatus; and
generating (S509) a three-dimensional shape model of an object by evaluating whether the voxel includes the object by using the foreground image corresponding to the image capturing apparatus for which the voxel is determined to be included within the range of the depth of field and not using the foreground image corresponding to the image capturing apparatus for which the voxel is determined not to be included within the range of the depth of field.

15. A program for causing a computer to function as each means of a shape generation apparatus defined in any one of claims 1 to 12.
